Europäisches Patentamt

European Patent Office

Office européen des brevets

(11) Numéro de publication: **0 421 881 A1**

## (12) DEMANDE DE BREVET EUROPEEN

(21) Numéro de dépôt: **90402753.9**

(22) Date de dépôt: **04.10.90**

(51) Int. Cl.⁵: **H01B 1/22, H01B 1/24, C25B 11/04**

(30) Priorité: **05.10.89 FR 8913029**

(43) Date de publication de la demande:
**10.04.91 Bulletin 91/15**

(84) Etats contractants désignés:
**AT BE CH DE DK ES FR GB GR IT LI LU NL SE**

(71) Demandeur: **ELECTRICITE DE FRANCE**
**Service National**
**2, rue Louis Murat**
**F-75008 Paris(FR)**

(72) Inventeur: **Lull, Stéphane**
**La Maillarde Gaillon**
**F-33340 Lesparre-Médoc(FR)**
Inventeur: **Damien, Alain**
**7, rue Gambetta**
**F-95150 Taverny(FR)**

(74) Mandataire: **Ahner, Francis et al**
**CABINET REGIMBEAU, 26, avenue Kléber**
**F-75116 Paris(FR)**

(54) **Matériau conducteur pour électrode, composant électrique et leur procédé de fabrication.**

(57) L'invention concerne un matériau composite conducteur.

Il comporte des fibres carbonées conductrices liées par une matrice, ladite matrice étant constituée d'au moins une résine et de préférence d'une charge assurant la conductivité de ladite matrice.

Application à l'industrie chimique et électrochimique.

FIG.1

EP 0 421 881 A1

La présente invention a pour objet un matériau composite électrique conducteur et plus particulièrement un matériau pour électrode et composant électrique.

Dans le domaine des procédés industriels électrochimiques, le choix des électrodes notamment de leur matériau constitutif, est toujours délicat.

Plus spécifiquement, le problème d'amenée de courant au sein du milieu où la réaction électrochimique doit intervenir constitue souvent un goulet d'étranglement.

Ainsi, les électrodes doivent être changées périodiquement et ce notamment lorsque l'électrolyse se fait avec apport ou départ de matière constitutive d'au moins une des électrodes. Les opérations de remplacement de changement des électrodes sont à la fois coûteuses en temps et en hommes et qui nécessitent beaucoup de soins en raison de l'intensité considérable qui traverse ces éléments.

Même lorsque il n'y a pas de transfert de matière entre les électrodes et le milieu, le remplacement des électrodes intervient périodiquement et implique des coûts importants. D'une manière générale, les matériaux pour électrodes et amenées de courant peuvent présenter les caractéristiques suivantes : ils doivent être, autant que possible, inertes vis-à-vis du milieu dans lequel ils amènent le courant. Ils doivent coûter le moins cher possible et être de bons conducteurs. En outre, ils doivent présenter des propriétés variables suivant la réaction électrochimique à réaliser ; en particulier, il est souhaitable qu'ils présentent une faible surtension pour le processus recherché par l'électrode et une forte surtension pour les processus parasites.

Cette dernière contrainte signifie que l'électrochimiste doit avoir à sa disposition une palette de divers matériaux pour les électrodes.

En outre, dans le cas spécifique des amenées de courant et des électrodes ayant à subir des efforts mécaniques, le matériau constitutif des électrodes ou des amenées de courant doit avoir une résistance mécanique et souvent une résistance à l'abrasion important. C'est le cas notamment des anodes, ou paniers anodiques et des dispositifs décrits dans la demande de brevet français déposée sous le n° 88 07763. Parmi les matériaux les plus couramment utilisés, il convient de mentionner le fer, le nickel, l'aluminium, le plomb, le platine, le bioxyde de plomb, la magnétite et les matières carbonées.

Ces dernières matières sont beaucoup utilisées soit que le carbone soit choisi en raison de son inertie vis-à-vis du milieu, soit qu'il soit choisi comme étant un élément consommable comme par exemple dans la métallurgie en voie ignée.

A l'heure actuelle, la plupart des matériaux pour électrode à base de carbone présente de nombreuses déficiences dans le domaine de la résistance mécanique et de la résistance à l'abrasion. En outre, les matériaux carbonés servant à réaliser des éléments électriques ou des électrodes sont très poreux et soumis à l'électrolyse qui s'use en raison de l'effritement occasionné par concomittance des pores avec les réactions électrochimiques.

Pour pallier cette difficulté, on a proposé de boucher les pores par différents polymères et autres composés cireux, tels que paraffine, bitume, huile minérale etc.

Toutefois, ces techniques ne font que retarder légèrement la dégradation du matériau carboné qui présente par ailleurs de nombreux avantages.

C'est pourquoi un des buts de la présente invention est de fournir un nouveau matériau carboné qui résiste à l'abrasion et qui présente des propriétés mécaniques améliorées.

Un autre but de la présente invention est de fournir un matériau qui présente une résistance accrue à l'érosion électrochimique.

Un autre but de la présente invention est de fournir un matériau qui présente une porosité faible, c'est-à-dire inférieure à environ 5 %, de préférence inférieure à 1 %.

Un autre but de la présente invention est de fournir un procédé de fabrication de ce nouveau matériau.

Un autre but de la présente invention est de fournir un matériau du type précédent qui ne pollue pas les milieux aqueux et dont le coût soit inférieur aux platinoïdes ou aux métaux plaqués de platinoïde(s).

Un autre but de la présente invention est de fournir des matériaux du type précédent qui soient susceptibles d'être thermoformés.

Un autre but de la présente invention est de fournir un matériau qui soit susceptible d'être usiné pour former des éléments de grandes tailles.

Ces buts et d'autres qui apparaîtront par la suite sont atteints au moyen d'un matériau composite conducteur comportant des fibres carbonées conductrices liées par une matrice, ladite matrice étant constituée d'au moins une résine et de préférence d'une charge assurant la conductivité de ladite matrice.

Il a été en effet montré au cours de l'étude qui a mené à la présente invention que de tels matériaux permettaient d'obtenir des composants électriques tels que par exemple des amenées de courant ou des électrodes qui aient une durée de vie sensiblement améliorée par rapport aux matériaux carbonés de la technique antérieure.

Avantageusement, les fibres présentent les caractéristiques mécaniques suivants :
- un module d'élasticité supérieur ou égal à 100 GPa, de préférence supérieur à 200 GPa ;
- une résistance à la traction supérieure ou égale à 1 GPa, de préférence à 2 GPa ;

Les fibres utilisables dans la présente invention ont avantageusement une résistivité volumétrique au plus égale à environ 2000 microhms/cm.

Les fibres conductrices de l'électricité sont avantageusement des fibres de carbone de longueurs dites "infinies".

Il peut s'agir de fibres synthétiques fabriquées par exemple à partir d'un précurseur polyacrylonitrile (PAN). Ces fibres, grâce à leur caractère unidirectionnel et à la continuité de leur texture due aux longues chaînes macromoléculaires qui les constituent, représentent la forme de matière pouvant présenter le moins de défauts.

Le caractère conducteur peut être donné au polyacrylonitrile, de façon en soi connue, par une carbonisation à une température de 800 à 1500°C.

De telles fibres de carbone ex-PAN (haute résistance) ont une conductivité suffisante (c'est-à-dire que leur résistivité est de l'ordre de 1500 à 2000 microohms/cm) et correspondent à une choix économique des plus intéressants.

Il peut être avantageux de faire subir un traitement de graphitisation auxdites fibres de carbone qui seront alors dénommées fibres de graphite (haut module). Ces fibres offrent une meilleure conductivité (700 à 1000 microohms/cm) mais leur coût augmente sensiblement.

Lorsque cette contrainte technique prime le prix, il est possible de faire appel à d'autres précurseurs comme par exemple le brai dont le traitement donne des fibres de carbone avec une conductivité très élevée (de 250 à 750 microohms/cm).

On réalise des électrodes ou des amenées de courant de fibres de carbone qui présentent une orientation principale que l'on appellera orientation longitudinale et qui correspond, en général, à l'orientation axiale de l'électrode ou de l'amenée de courant lorsqu'il y a une orientation privilégiée (cette orientation est la référence par rapport à laquelle les angles sont indiqués). Le taux volumique de remplissage, c'est-à-dire le volume occupé par lesdites fibres varie de 30 à 70 %.

La résistivité longitudinale (0°) dépend du taux volumique de fibres ; ainsi, avec des électrodes en fibre de carbone ex-PAN/haute résistance unidirectionnelle, il a été possible d'obtenir une résistivité de 2200 microohms/cm avec 60 % de renfort.

En revanche, les fibres longitudinales (0°) participent très peu à la conduction radiale (90°) donc ont peur d'influence sur la résistivité transversale (90°). Cela est du à très grande anisotropie desdites fibres. Ainsi, on a pu obtenir des valeurs voisines d'environ 1 ohm.cm avec 60 % de taux volumique.

Ainsi qu'on le verra par la suite, il est possible de pallier cette déficience de la conductivité transversale en agissant sur la charge, la résine et l'arrangement des fibres.

Outre les problèmes de conductivité radiale, l'utilisation des fibres longitudinales (0°) présente l'inconvénient de voir l'éventuelle extrémité libre d'une électrode ou d'une conduite de courant s'ouvrir comme une marguerite après destruction de la matrice, c'est-à-dire de la résine et de sa charge (jusqu'à 40 % du diamètre). Pour pallier ces différents inconvénients, l'étude qui a mené à la présente invention a permis de montrer que des électrodes avec un substrat de fibres carbonées composé d'une ou plusieurs tresses dont l'angle varie de 20° à 45° et de fibres longitudinales 0° situées de préférence à l'intérieur des tresses permet de réduire significativement ces inconvénients. Le taux volumique de renfort, c'est-à-dire le taux volumique des fibres se situe de préférence entre 30 et 70 % avec une proportion en tresse, de préférence extérieure de 20 à 50 % du renfort total. Ainsi, même en cas de destruction de la résine matricielle, l'électrode reste sensiblement homogène et peut continuer d'assurer sa fonction.

Un des avantages de l'orientation multidirectionnelle est d'améliorer sensiblement la conductivité radiale notamment avec des systèmes à double ou à multiples tresses.

Ainsi, en cas de besoin, il est possible de pallier l'anistropie des fibres par des systèmes de tresses réalisés autour d'une direction longitudinale moyenne. Cette tresse peut être elle-même disposée de manière que l'isotropie à grande échelle soit rétablie.

Toutefois, dans la suite de la description on se réfère à un matériau présentant une direction longitudinale (0°) nette avec une proportion importante de fibres longitudinales hors tresse. L'homme de métier pourra alors réaliser les transpositions et mises en oeuvre qui l'intéresseront et dont le caractère isotrope ou anisotrope sera déterminé, en réalisant les changements qui s'imposent.

Avantageusement, le matériau comporte une âme métallique réalisée en métaux ou alliages dont la conductibilité est bonne, c'est-à-dire dont la conductibilité est voisine de celle des meilleurs métaux conducteurs de l'électricité tels que l'argent, le cuivre ou l'aluminium.

Les résines utilisées pour l'enduction et pour lier les fibres carbonées peuvent être selon les utilisations thermodurcissables ou thermoplastiques. Dans ce dernier cas, il est possible de faire un thermoformage après la fabrication du matériau.

Les résines synthétiques qu'elles soient thermodurcissables ou thermoplastiques doivent jouer le rôle de liant inter-fibre au sein de la matrice et d'assurer une bonne tenue à la corrosion électrochimique ainsi qu'aux contraintes mécaniques, en particulier les frottements et aux chocs.

Parmi les résines thermodurcissables utilisables pour la présente invention, on peut citer les polyesters, les résines à base d'ester vinyliques, les résines époxydes, phénoplastes, furaniques, aminoplastes, les polyimides et les silicones.

Les résines thermodurcissables anti-corrosion sont les polyesters orthophtaliques avec acide tetra-hydrophtalique pour les milieux chlorures, les polyesters isophtaliques tels que celui vendue sous la marque Palatal A 410 (cf. notice M 2175f 81232, mars 1987 édité per BASF) pour les milieux acides forts, les esters vinyliques à base bi-phénol A, tels que ceux vendus sous les marques Palatal A 430 et A 431 (cf. notice technique M 2580 f 81279 avril 1987 édité par BASF) pour les milieux basiques et alcalins, ainsi que les résines époxy.

Les résines thermoplastiques sont en général introduites sous forme de poudre. La fibre est imprégnée par une dispersion de poudre thermoplastique. L'ensemble fibre + poudre est lié avant la préparation proprement dite du matériau grâce à une gaine extérieure constituée de préférence du même polymère thermoplastique.

Selon certaines variantes, l'imprégnation des fibres par la matrice thermoplastique est obtenue par une phase solvant.

Il existe aussi des semi-produits préimprégnés ou également des mèches constituées de fibres et de filaments thermoplastiques intimement liés.

Parmi les résines thermoplastiques, on peut citer les résines polyvinyliques telles que PVC, acétate de vinyle, polystyrène, polyacrylate, compolymères ABS et SAN, les polyoléfines telles que le polyéthylène, le polypropylène et leurs copolymères, diverses polyoléfines, des dérivés cellulosiques tels que les acétates de cellulose, les polamides, les polycarbonates, les polysulfones, les poly-etherethercétones (PEEK), les polyesters saturés, les polyéther-imides ainsi que le polysulfure de phénylène (PPS).

Les résines thermoplastiques préférées sont les polyéther-éther-cétone tels que ceux vendus sous la dénomination commerciale "Victrex PEEK", les polysulfones et les poly-éther-imides (PEI) tels que ceux vendus sous les dénominations commerciales ULTEM, en raison de leur grande résistance aux agressions chimiques, ainsi que le polysulfure de phénylène (PPS).

Les charges sont souvent constituées de poudre naturelles ou synthétiques et ont notamment pour rôle d'assurer la conduction de l'électricité au sein de la matrice.

Les charges jouent également un rôle dans la résistance chimique et la dureté. Elles peuvent également jouer un rôle dans le caractère glacé de surface, c'est-à-dire dans le caractère lisse et non poreux de la surface. Ce caractère lisse et non poreux joue un rôle important dans la résistance aux agressions électrochimiques.

Ces poudres ne doivent pas polluer le milieu, c'est-à-dire qu'elles doivent être, dans le mesure du possible, inertes vis-à-vis du milieux dans les conditions électrochimiques régnant à la surface de l'électrode du composant électrique.

Leur granulométrie et leur propriété de tension superficielle doivent être telles qu'elles s'incorporent facilement à la résine. En particulier, on peut indiquer que leur granulométrie est avantageusement comprise entre 2 et 500 microns, de préférence entre 2 et 115 microns. De préférence, les charges ont un $d_{80}$ inférieur à 50 microns, de préférence inférieur à 10 microns et un $d_{20}$ inférieur à 20 microns, de préférence à 5 microns.

Les charges sont avantageusement choisies parmi les poudres de graphite telles que celles décrites dans la notice technique SMA 18 F 7850 édité par la société Le Carbone-Lorraine (de préférence, la poudre référencée EG 3851), les poudres de magnétite $FE_3O_4$ telles que celles vendues par la société Bayer sous la marque Bayferrox (de préférence sous la référence 8610) ou d'oxyde de plomb. Le taux de charge des résines varie de 0 à 60 % du poids de la résine proprement dite (PCR).

A partir de ce matériau, il est possible de réaliser divers composants électriques tels que des amenées de courant et des électrodes. Ces composants électriques sont de préférence réaliser de manière qu'il y ait une couche de protection à leur surface, cette couche est constituée par la matrice (résine + charge) et doit être d'aspect glacé, ce qui est le signe du caractère non poreux de la surface. A titre indicatif, une épaisseur comprise entre environ 0,05 et 0,5 mm donne de bons résultats pour les électrodes et les amenées de courant.

La présence d'une âme métallique au sein du composant du type électrode permet d'augmenter considérablement la conductivité longitudinale des électrodes. Ainsi avec une âme en cuivre, l'interface cuivre/composite est satisfaisante puisque les valeurs longitudinales et radiales sont respectivement de 42 microohms (pour une valeur théorique de 7 microohms/cm en cas de contact parfait) et 0,35 ohm/cm. Ces propriétés permettent d'envisager des électrodes laissant passer des densités de courant importantes.

Les électrodes et amenées de courant selon l'invention sont particulièrement bien adaptées aux applications de l'électrochimie en général et en particulier au traitement des effluents, la dépollution, l'électrophorèse, l'électroosmose, les dépôts galvaniques et la récupération des métaux à dépôt électrolytique (anode).

Le matériau et les composants électriques selon la présente invention peuvent être réalisés par le procédé décrit ci-après et qui comporte les étapes suivantes :

a) imprégnation de fibres carbonées par une résine et éventuellement sa charge,

b) préchauffage du substrat,

c) passage desdites fibres au travers d'un moule filière thermorégulé,

d) thermoformage éventuel.

De préférence, ils visent un système moule-filière thermo-régulé dans lequel on fait passer un substrat de fibre imprégné de la matrice liquide ou sous forme de poudre (résine + charge).

Cette opération se fait de préférence en continu, la vitesse d'avancement peut varier de 0,2 à 2 m par minute et permet d'envisager une production très importante.

Ce procédé permet de fabriquer notamment des électrodes de grande longueur, tronçonnables en continu dont la longueur peut varier de quelques centimètres à plusieurs mètres. Les électrodes peuvent être plates et être suffisamment souples pour être conditionnées et stockées sous forme de rouleau.

Lorsque l'on l'utilise des résines thermoplastiques, il est possible de remodifier la forme des électrodes ou amenées de courant par thermoformage. Lorsque les électrodes sont mises en contact avec des milieux dégageant de l'oxygène ou bien du chlore, on peut protéger l'extrémité de l'électrode et notamment lorsque à la suite d'une coupe les fibres ont été mises à nu par un bouchon, par exemple de PVC ou une imprégnation de résine synthétique ou de colle.

Les dessins qui suivent correspondent à des modes de réalisation d'amenée de courant qui peuvent également jouer le rôle d'électrode.

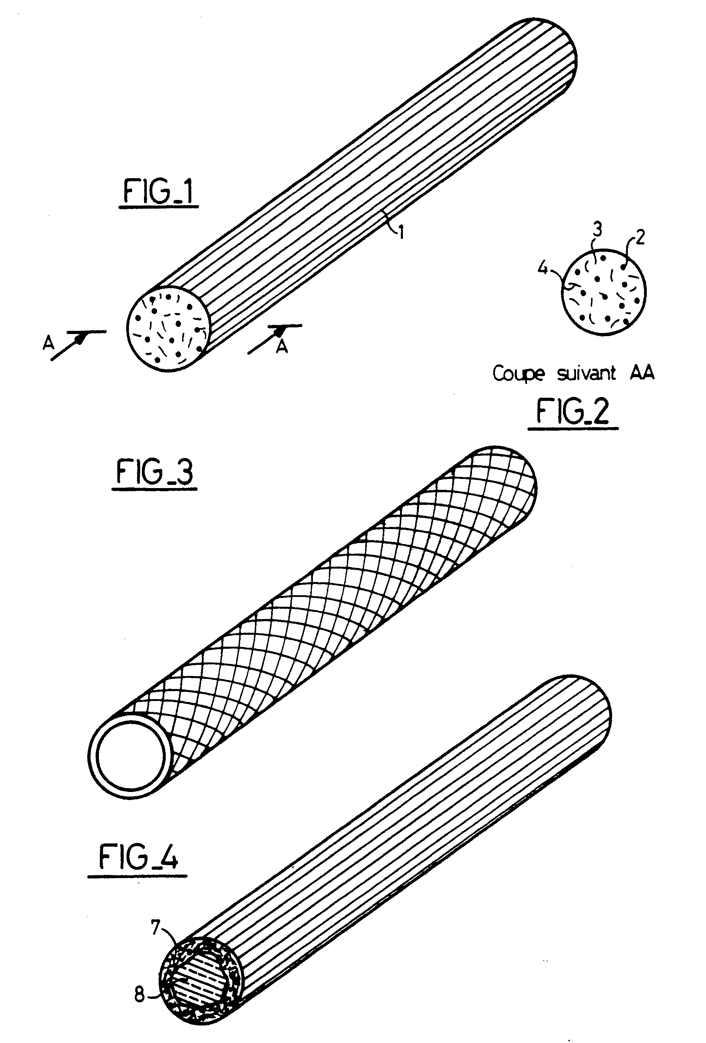

. La figure 1 représente en vue cavalière, une amenée de courant (1) selon la présente invention.

. La figure 2 représente la coupe d'une électrode (1), dans laquelle on fait figurer le renfort en fibre de carbone (2) qui est unidirectionnel et longitudinal ainsi que la résine synthétique (3) et les charges conductrices (4).

. La figure 3 représente une amenée de courant composite de forme ronde dont le renfort extérieur est constitué d'une tresse en fibre de carbone (5) et le renfort intérieur de la fibre de carbone longitudinal (6).

. La figure 4 représente une amenée de courant de forme cylindrique dont le renfort extérieur est de la fibre de carbone longitudinale (7) ($0°$) et l'âme métallique intérieure (8) est une tresse de cuivre.

Les exemples non limitatifs suivants illustrent la présente invention et ses avantages.

Exemple 1 : utilisation des matériaux selon la présente invention pour faire des amenées de courant dans le dispositif décrit dans la demande de brevet déposée au nom de ELECTRICITE DE FRANCE sous le n° 88 07763 le 29 avril 1988.

Ce dispositif est un dispositif d'électro-coagulation à anode soluble, permettant de traiter en vue du traitement des effluents les matières en suspension telles que les colloïdes et les émulsions.

Ce dispositif renouvelle la surface de l'anode soluble constituée par des grenailles de métaux ou d'alliages par attrition desdites grenailles dans un tambour horizontal tournant autour de son axe. Le tambour joue le rôle de système anodique permettant l'amenée de courant aux grenailles.

Ce tambour a été équipé de barreaux placés selon la direction des génératrices, ces barreaux étant réalisés en différents matériaux parmi lesquels le matériau selon la présente invention.

Les barreaux ont été réalisés selon les paramètres suivants :

- électrode : diamètre 15,7 mm,
- longueur : 2 mètres,
- renfort : fibre de carbone HR,
- orientation : longitudinale ($0°$),
- taux volumique de renfort : 40 %,
- résine : vinylester bisphénol A,
- charge : poudre de graphite (20-115 $\mu$),

5

EP 0 421 881 A1

- taux de charge : 50 %.

Après quelques centaines d'heures de fonctionnement, on ne décèle ni traces d'abrasion par les grenailles de métaux, ici l'aluminium, ni destruction électrochimique anodique des électrodes composites selon l'invention.

Ainsi, n'ont été constatées non plus ni oxydation anodique, ni une quelconque dégradation.

Les essais réalisés dans les mêmes conditions sur des barreaux en graphite fritté ont montré que ces derniers étaient fragiles et qu'il était difficile d'en produire des longueurs supérieurs à 50 cm. Des barreaux réalisés en titane se couvrent d'un dépôt d'oxyde isolant que l'on peut éliminer par adjonction d'une couche de platine ou de platinoïde. Toutefois l'abrasion ramène très vite les barreaux à la situation antérieure.

Des essais réalisés sur des barreaux en aluminium démontrent également l'existence d'un gros problème d'usure et d'entretien.

Exemple 2 : test d'anode selon la présente invention pour la récupération de métaux précieux (essentiellement argent) dans les bains de fixage photographique.

Ces anodes ont été réalisées selon la présente invention et présentent les caractéristiques spécifiées ci-après :

Référence 2-4
- Anode : diamètre 8 mm
- Longueur immergée : 100 mm
- Renfort : fibre de carbone HR
- Orientation : longitudinale (0°)
- Taux volumique de renfort : 52 %
- Résine : vinylester bisphénol A
- Charge : poudre de graphite (10-115 $\mu$)
- Taux de charge : 15 pcr

Référence 3-3
- Anode : diamètre 8 mm
- Longueur immergée : 100 mm
- Renfort : fibre de carbone HR
- Orientation : longitudinale (0°)
- Taux volumique de renfort : 46 %
- Résine : vinylester bisphénol A
- Charge : graphite (paillettes 112-500 $\mu$)
- Taux de charge : 35 pcr

Référence 4-1
- Anode : diamètre 8 mm
- Longueur immergée : 100 mm
- Renfort : fibre de carbone HR
- Orientation : longitudinale (0°)
- Taux volumique de renfort : 40 %
- Résine : vinylester bisphénol A
- Charge : poudre de graphite (10-115 $\mu$)
- Taux de charge : 50 pcr

Ces électrodes ont été utilisées pour électrolyser le bain de fixage, dont la composition moyenne est la suivante :

Composition moyenne du bain
- Thiosulfate de sodium ou d'ammonium : 200 à 250 g/l
- Sulfite de sodium : 10 à 30 g/l
- Acide acétique : 15 à 30 cc/l
- Acide borique : 5 à 10 g/l
- pH : 6 à 6,5
- Ag métal : 5 à 6 g/l.

La cellule d'électrolyse est constituée d'un bain mort avec agitation à volume de 5 litres dans une cuve parallélépipédique. Les anodes sont en matériau selon la présente invention et situées au centre de la cuve. Les cathodes sont des cathodes périphériques. Le rapport de surface anodes/cathodes varie de 1/8 à 1/10 ; la cathode est en acier inox avec dépôt d'argent. La détérioration des anodes est suivie en observant

6

l'évolution des paramètres suivants :
- aspect de surface (débute de désagrégation ou non),
- résistance ohmique de surface,
- variation de poids,
- variation de volume.

Les mesures de résistance de surface ont été effectuées sur des longueurs de 10 cm. Divers tests ont été réalisés :

a) tenue à 1 A/dm² (anodique)

Après 100 heures d'essais, pas de détériorations décelables des anodes.

b) tenue à 2 A/dm² (anodique)

Ces essais ont été réalisés pendant 9 heures d'essai de jour et 15 heures d'interruption la nuit. Pendant l'interruption les anodes restent immergées dans le bain pendant que la liaison électrique anode/cathode est coupée afin d'éviter tout phénomène de pile. Au bout de 100 heures d'essais en cumulé, les anodes ont été examinées. Ces résultats sont rassemblés dans le tableau suivant :

| Référence Anode | Résistance t = 0 heure OHM/cm | Résistance t = 100 heures OHM/cm | Observations tenue*) |
|---|---|---|---|
| 2 - 4 | 0,09 | 0,14 | Correcte |
| 3 - 3 | 2,38 | 1,78 | Correcte |
| 4 - 1 | 0,09 | 0,17 | Correcte |

c) tenue à 5 A/dm² (anodique)

après 100 heures, les anodes se tiennent toujours correctement (pas de gonflement, pas de désagrégation ni de passivation).

## Revendications

1. Matériau composite conducteur pour la réalisation d'électrodes et d'amenées de courant sous potentiel anodique, comportant des fibres carbonées conductrices liées par une matrice, ladite matrice étant constituée d'au moins une résine et de préférence d'une charge assurant la conductivité de ladite matrice.

2. Matériau selon la revendication 1, caractérisé par le fait que lesdites fibres possède une résistance à la traction supérieure à 1 GPa, de préférence supérieure à 2 Gpa.

3. Matériau selon l'une des revendications 1 et 2, caractérisé par le fait que lesdites fibres présentent une résistivité électrique au plus égale à environ 2000 microohms/cm, de préférence au plus égale à 1000 microohms/cm.

4. Matériau selon l'une des revendications 1 à 3, caractérisé par le fait que lesdites fibres sont des fibres de carbone.

5. Matériau selon l'une des revendications 1 à 4, caractérisé par le fait que ladite fibre de carbone est obtenue à partir d'un polyacrylonitrile.

6. Matériau selon l'une des revendications 1 à 4, caractérisé par le fait que lesdites fibres de carbone sont obtenues à partir de brai.

7. Matériau selon l'une des revendications 1 à 6, caractérisé par le fait que lesdites fibres de carbone ont subi un traitement de graphitisation.

8. Matériau selon l'une des revendications 1 à 7, caractérisé par le fait que ladite résine est une résine thermodurcissable.

7

9. Matériau selon la revendication 8, caractérisé par le fait que ladite résine thermodurcissable est choisie dans le groupe constitué par les polyesters, les résines à base d'ester vinyliques, les résines époxydes, phénoplastes, furaniques, aminoplastes, les polyimides et les silicones.

10. Matériau selon les revendications 1 à 7, caractérisé par le fait que ladite résine est une résine thermoplastique.

11. Matériau selon la revendication 10, caractérisé par le fait que ladite résine thermoplastique est choisie dans le groupe constitué par les résines polyéther/éther/cétone, les résines poly-éther-imide, les résines polysulfones ainsi que le polysulfure de phénylène (PPS).

12. Matériau selon l'une des revendications 1 à 11, caractérisé par le fait que ladite charge représente 0 à 60 % de la résine en poids.

13. Matériau selon la revendications 12, caractérisé par le fait que ladite charge est sous forme de poudre dont la granulométrie est comprise entre 2 et 500 micromètres, de préférence entre 2 et 115 micromètres.

14. Matériau selon l'une des revendications 12 et 13, caractérisé par le fait que ladite charge est choisie dans le groupe constitué par graphite, la magnétite, l'oxyde de plomb et leur mélange.

15. Matériau selon l'une des revendications 1 à 14, caractérisé par le fait que le taux volumique de fibres de carbone est compris entre environ 30 et environ 70 %.

16. Matériau selon l'une des revendications 1 à 15, caractérisé par le fait que lesdites fibres sont disposées en une ou plusieurs tresses entourant des fibres longitudinales 0° et présentent un angle de 20 à 45°, avec lesdites fibres longitudinales.

17. Matériau selon l'une des revendications 1 à 16, caractérisé par le fait qu'il comporte en outre un ou plusieurs fils métalliques d'un métal bon conducteur.

18. Electrode caractérisée par le fait qu'elle est réalisée en matériau d'une des revendications 1 à 17.

19. Procédé de fabrication des matériaux et des composants électriques selon les revendications 1 à 18, caractérisé par le fait qu'il comporte les étapes suivantes :

    a) imprégnation de fibres carbonées par une résine et éventuellement sa charge,

    b) préchauffage du substrat,

    c) passage desdites fibres au travers d'un moule filière thermorégulé.

    d) thermoformage éventuel.

20. Procédé selon la revendications 19, caractérisé par le fait que le moule filière thermorégulé présente un cycle compris entre 100 et 220°C pour les thermodurcissables après 1500 millimètres.

21. Procédé selon la revendication 19, caractérisé par le fait que le moule filière thermorégulé présente un cycle compris entre 150 et 450°C pour les thermoplastiques sur une longueur de 50 à 500 millimètres.

FIG.1

FIG.2

Coupe suivant AA

FIG.3

FIG.4

# RAPPORT DE RECHERCHE EUROPEENNE

Numéro de la demande

## EP 90 40 2753

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | US-A-4 816 184  (M.FUKUDA & AL.) <br> * le document en entier * <br><br> — — — | 1,3,4, 10-14,17, 19 | H 01 B 1/22 <br> H 01 B 1/24 <br> C 25 B 11/04 |
| X | EP-A-0 306 671  (HITACHI) <br> * revendications 1-19 * <br><br> — — — | 1,3,4, 10-13,17, 19 | |
| X | EP-A-0 131 067  (TOSHIBA) <br> * page 4, ligne 2-5; revendications 1-15 * <br><br> — — — | 1,4, 10-12,15, 19 | |
| X | EP-A-0 244 626  (B. WESSLING) <br><br> — — — — — | 1,4,10,12, 14,15,19 | |

DOMAINES TECHNIQUES RECHERCHES (Int. Cl.5)

H 01 B
C 25 B

Le présent rapport de recherche a été établi pour toutes les revendications

| Lieu de la recherche | Date d'achèvement de la recherche | Examinateur |
|---|---|---|
| La Haye | 30 novembre 90 | DROUOT M.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

    & : membre de la même famille, document correspondant